# FASCICULE DE BREVET EUROPEEN

(11) **EP 3 802 312 B1**
(45) Date de publication et mention de la délivrance du brevet: **11.09.2024**
(21) Numéro de dépôt: 19740637.4
(22) Date de dépôt: 06.06.2019
(51) Int. Cl.: B63C 11/12

(54) **MASQUE DE PLONGÉE, AVEC SYSTÈME OPTIQUE D'AFFICHAGE**
TAUCHMASKE, MIT EINEM OPTISCHEN ANZEIGESYSTEM
DIVING MASK, WITH OPTICAL DISPLAY SYSTEM

(30) Priorité: 07.06.2018 FR 1854933
(43) Date de publication de la demande: 14.04.2021
(73) Titulaire: Microoled, 38000 Grenoble Cedex 9 (FR)
(72) Inventeur: MARCELLIN-DIBON, Eric, 92420 Vaucresson (FR); RENAUD-GOUD, Philippe, 38000 Grenoble (FR); SIOURAKAN-BADALOU, Cédric, 38000 Grenoble (FR)
(74) Mandataire: Schmidt, Martin Peter
(86) Numéro de dépôt international: PCT/FR2019/051359
(87) Numéro de publication internationale: WO 2019/234361

(56) Documents cités:
- EP-A2- 0 583 116
- WO-A1-90/01717
- US-A- 4 081 209
- US-A1- 2006 228 073

## Description

### Domaine technique de l'invention

L'invention concerne le domaine des systèmes optiques, et plus particulièrement des systèmes optiques d'affichage. L'invention porte sur un système optique d'affichage intégré dans un masque de plongée (appelé « masque connecté »).

### Etat de la technique

D'une manière générale, les masques de plongée doivent résister à une forte pression et sont de ce fait assez encombrants ; cela limite le champ de vision de l'environnement extérieur. L'intégration d'un système de vision dans un masque de plongée est également soumise à des contraintes d'encombrement. On connaît divers modèles de masque de plongée permettant de visualiser des informations ou images avec un affichage tête haute, dit vision HUD. Un exemple est le système Oceanic Datamask^{™} qui est dans le commerce. Un grand nombre de documents brevets proposent des configurations différentes. Ces solutions conduisent en règle générale à des masques de plongée assez encombrants et lourds qui représentent des objets spécifiques ne se prêtant pas à un usage courant.

Les documents US 6 447 115 et US 7 038 639 (US Navy), ainsi que US 8 082 922 (Dräger Safety) proposent de positionner le système d'affichage dans l'angle inférieur bas du masque. Ce système est particulièrement encombrant, car l'afficheur limite le champ de vision de l'utilisateur. Le chemin optique dans cette configuration est une vue directe sur l'afficheur. Avec une géométrie similaire, les documents WO 2011/044680 et WO 2011/085501 (Intel) proposent d'utiliser un afficheur miniaturisé, ce qui diminue l'impact du système sur le champ de vision, ainsi que sur l'encombrement du masque en lui-même. WO 90/01717 (GEC Marconi) et US 4,081,209 (Elliott) décrivent des casques de pilote avec afficheur interne qui projette l'image sur la vitre concave.

L'encombrement à l'intérieur du masque par le système d'affichage peut être évité si l'afficheur est déporté à l'extérieur du masque. Cela est décrit dans les brevets US 9 001 005 et US 9 069 166 (Intel). Dans les deux cas le chemin optique est le même, à savoir la vision directe de l'afficheur. Un tel afficheur externe peut également limiter le champ de vision. Par ailleurs l'image traverse la vitre et subit une diffraction et réflexion, qui peut diminuer sa netteté et luminosité. En tous les cas, un système d'affichage externe doit être protégé pour pourvoir résister à l'environnement externe (pression d'eau, chaleur, fumée, selon le type de casque) ; cela rend le système assez complexe, à la fois sur le plan mécanique et sur le plan électrique.

Un autre système avec afficheur externe est décrit dans DE 102 011 082 208 (Carl Zeiss) ; il propose des lunettes de plongée comprenant un afficheur ainsi qu'un prisme à l'extérieur. L'image est acheminée dans le plan de la vitre vers l'oeil de l'utilisateur par réflexion multiple à l'intérieur de la vitre du masque. Les régions de propagation de l'image résultent d'un traitement spécifique et localisé de la vitre par le dépôt de couches optiques relativement complexe à mette en oeuvre.

Enfin le masque de plongée décrit dans WO 2002/00299 (Comsonic Trilithic) décrit un afficheur décalé avec projection prismatique intégrée, disposé sur la vitre. L'image est projetée sur le prisme et renvoyée directement vers l'oeil de l'utilisateur.

L'avantage des systèmes optiques d'affichage disposés à l'extérieur du masque est qu'ils n'encombrent pas l'espace à l'intérieur du masque. Leur inconvénient est qu'ils sont assez volumineux et lourds, car il faut les encapsuler hermétiquement contre la pression d'eau et l'endommagement mécanique. De ce fait ils limitent le champ de vision de l'utilisateur par l'extérieur du masque. Par ailleurs, la projection directe dans l'œil de l'utilisateur nécessite un effort de focalisation avec l'oeil, qui contribue à la fatigue oculaire.

Un but de la présente invention est de remédier, au moins partiellement, aux inconvénients de l'art antérieur évoqués ci-dessus.

### Objets de l'invention

Selon l'invention le problème est résolu par un système d'affichage compact comportant deux composants optiques, à savoir un micro-afficheur de type OLED, et un prisme. Ce dernier agrandit l'image reçue par le micro-afficheur et la projette sur la face intérieure de la vitre du masque. L'utilisateur voit l'image en réflexion sur la vitre, directement dans son champ de vision. Pour l'utilisation avec un masque de plongée, aucun traitement optique particulier de la vitre du masque n'est nécessaire, car l'indice optique de la face du verre (environ 1,46) est relativement bien adapté à l'indice optique de l'eau (environ 1,34), et on n'observe donc pas de réflexions parasites.

Un premier objet de l'invention est un masque de plongée, comprenant :
- une monture apte à être montée sur le visage d'un utilisateur,
- une vitre portée par ladite monture
- un système optique d'affichage, qui comprend
   ∘ un afficheur propre à projeter une image et
   ∘ un prisme propre à recevoir ladite image à partir dudit afficheur et à la renvoyer,
caractérisé en ce que
- le prisme possède une première et une deuxième faces actives et une face basale,
- la vitre est une vitre plane qui présente, sur sa face interne, une zone de réflexion, et
- ledit afficheur et ledit prisme sont configurés et disposés de manière à ce que
   ∘ ledit afficheur projette ladite image sur la première face active du prisme,
   ∘ l'image traverse le prisme et est réfléchie par la face basale du prisme vers la deuxième face active,
   ∘ l'image est projetée à partir de ladite deuxième face active du prisme sur ladite zone de réflexion de ladite vitre,
   ∘ ladite vitre renvoie ladite image dans l'oeil de l'utilisateur, et
   ∘ une lentille est placée sur le chemin optique entre le prisme et ladite zone de réflexion.

De manière préférée, les deux faces actives du prisme agrandissent l'image de l'afficheur et forment une image virtuelle à une certaine distance de l'utilisateur.

Lesdites première et deuxième faces latérales actives s'étendent à partir d'une face basale et se rejoignant au sommet du prisme. Ledit prisme comprend typiquement, outre lesdites première et deuxième faces latérales actives, au moins une, notamment deux autres faces latérales inactives, chaque face latérale inactive s'étendant à partir de ladite face basale et se rejoignant en ladite pointe sommitale ou arête sommitale ou surface sommitale.

Dans un mode de réalisation au moins une desdites première et deuxième faces actives est convexe et/ou asphérique.

Dans un autre mode de réalisation l'un parmi l'afficheur et le prisme est fixé sur la face interne de la vitre, alors que l'autre parmi l'afficheur et le prisme est fixé sur la monture ; le prisme peut être fixé sur la face interne de la vitre avec son sommet.

Le masque peut comprendre un seul système optique d'affichage disposé devant l'un des yeux de l'utilisateur, ou bien deux systèmes optiques d'affichage, chacun desdits systèmes optiques étant disposé devant un oeil respectif de l'utilisateur. On peut aussi disposer deux systèmes optiques d'affichage devant le même oeil de l'utilisateur.

Ladite lentille du système optique du masque peut être de type bi-convexe, piano-convexe, plano-concave, bi-concave, ménisque ; on peut également utiliser une association de lentilles, formant par exemple un doublet.

Dans un mode de réalisation, ledit masque de plongée comprend un système optique monobloc, et comprend une monture apte à être montée sur le visage d'un utilisateur et une vitre portée par ladite monture,
ledit système optique d'affichage comprenant
- un afficheur propre à projeter une image,
- un prisme propre à recevoir ladite image à partir dudit afficheur et à renvoyer ladite image en direction de la vitre, ledit prisme possédant une première et une deuxième faces actives,
- une lentille placée sur le chemin optique entre le prisme et ladite zone de réflexion,
- des moyens de fixation sur la monture ou la vitre dudit masque.

Ladite lentille a une fonction optique de convergence et de correction du faisceau. Ledit système optique monobloc est avantageusement étanche ; ladite lentille peut aussi assurer une fonction de fenêtre d'étanchéité du système optique monobloc.

### Description des figures

Les figures 1 à 4 illustrent des modes de réalisation de l'invention. Elles sont données à titre d'exemples et ne limitent pas la portée de l'invention.
La figure 1 est une vue frontale d'un masque selon l'invention. Elle montre deux vues différentes du même mode de réalisation (figures 1A et 1C d'une part, figure 1B d'autre part).
La figure 2 est une vue schématique du système optique d'affichage d'un masque selon la figure 1 ; elle ne montre que les chemins optiques.
La figure 3 est une vue schématique d'un système optique d'affichage selon un autre mode de réalisation, qui comporte une lentille entre le prisme et la vitre.
La figure 4 montre trois vues d'un masque qui met en oeuvre le système optique d'affichage de la figure 3 ; la figure 4(a) est une vue frontale du masque, la figure 4(b) une vue de l'intérieur qui montre le système optique d'affichage en transparence.

Les repères numériques suivants sont utilisés dans la présente description:

| | | | |
|---|---|---|---|
| 1 | Masque | 22 | Deuxième face active du prisme 20 |
| 2 | Vitre | 23 | Face basale du prisme 20 |
| 3 | Face interne de la vitre 2 | 24 | Sommet du prisme |
| 4 | Face externe de la vitre 2 | 25 | Première face latérale du prisme 20 |
| 5 | Monture du masque 1 | 26 | Deuxième face latérale du prisme 20 |
| 6 | Passage pour le nez | 27 | Surface courbe (dioptrique) |
| 7 | Moyens d'étanchéité | 28 | Lentille |
| 10 | Système optique d'affichage | 30 | Zone de réflexion sur la vitre 2 |
| 12 | Afficheur | 40 | Tête de l'utilisateur |
| 20 | Prisme | 41 | Œil de l'utilisateur |
| 21 | Première face active du prisme 20 | 42 | Système optique monobloc |

### Description détaillée

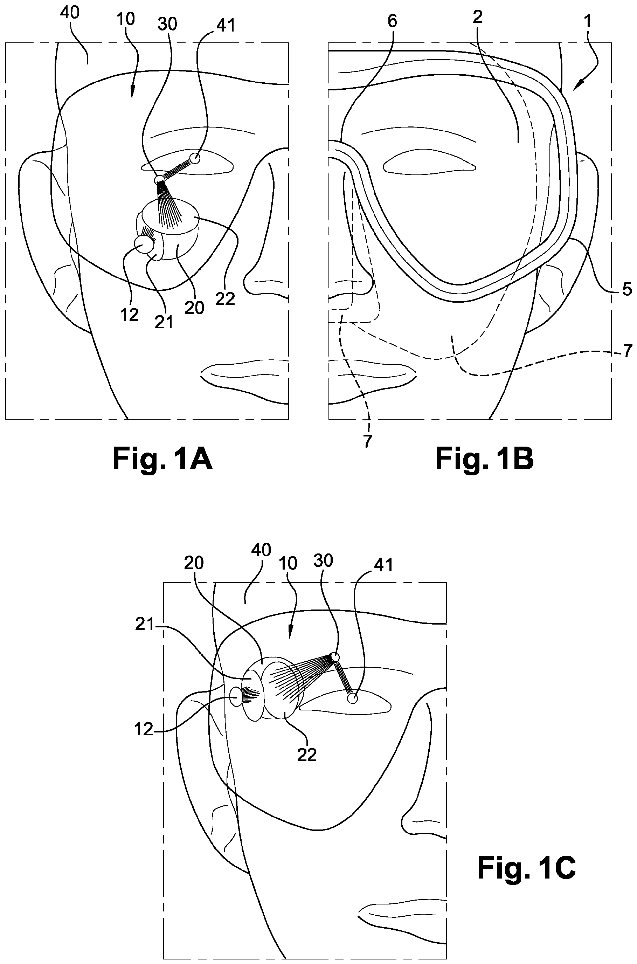

La figure 1 montre un mode de réalisation typique d'un masque selon l'invention. La figure 1B montre uniquement (et de manière schématique) les aspects généraux du masque, avec sa monture et les moyens pour rendre le masque étanche, alors que les figures 1A et 1C montrent uniquement (et de manière schématique) les composants optiques du masque, mais ne montre pas sa monture.

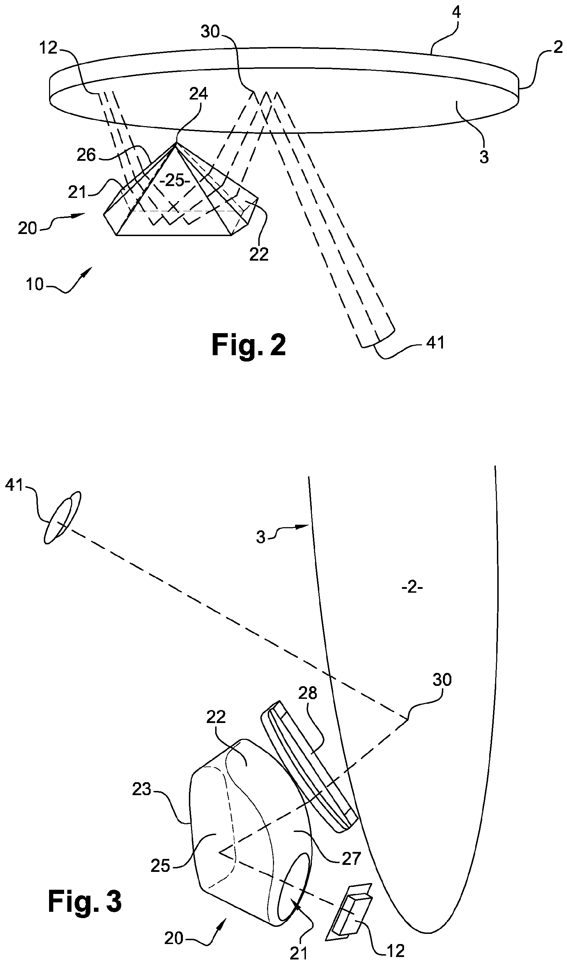

Le masque **1** comprend une vitre **2** tenue par une monture **5,** visibles uniquement sur la figure 1B. La figure 1 ne montre pas d'autres éléments essentiels mais connus du masque, tel que ses moyens de fixation sur la tête **40** de l'utilisateur ; les moyens pour rendre le masque étanche sont esquissés de manière schématique et portent le repère **7.** La vitre **2** présente une face interne **3** et une face externe **4,** visibles sur la figure 2. La face interne **3** peut être plane ou légèrement galbée. De même, la face externe **4** peut être plane ou légèrement galbée. La monture **1** selon ce mode de réalisation présente un passage **6** pour le nez ; c'est avantageux car ainsi la vitre **2** se trouve plus proche de l'oeil **41** de l'utilisateur. Cependant, la présente invention peut également être mise en oeuvre pour un masque qui ne présente pas de passage pour le nez.

Selon l'invention, le masque **1** présente un système optique d'affichage **10** visible uniquement sur les figures 1A et 1C. Ce système **10** est disposé à l'intérieur du masque **1.** Il comprend un afficheur **12** et un prisme **20.** Le système optique d'affichage **10** selon l'invention peut être positionné de différentes manières, et les figures 1A et 1C montrent deux possibilités : sur la figure 1A l'afficheur **12** se trouve sur un axe horizontal avec le prisme **20,** alors que sur la figure 1C l'afficheur **12** se trouve sur un axe proche d'un axe horizontal avec le prisme **20.** Dans les deux cas la zone de projection **30** se trouve sur la face interne **3** de la vitre **2.**

L'afficheur **12** est avantageusement un micro-afficheur de type OLED (Organic Light Emitting Diode), connu en tant que tel. Le prisme **20,** mieux visible sur la figure 2, comprend une base ou face basale **23,** de forme rectangulaire en vue de dessus. Les faces latérales du prisme s'étendent à partir de la base **23,** et se rejoignent en une arête sommitale **24** (appelée « arête réfringente »). On distingue deux premières faces opposées, dites actives ou dioptres **21** et **22,** ainsi que deux autres faces opposées, dites inactives **25** et **26.** Les faces latérales inactives **25,26** ne participent pas à l'effet optique du système optique d'affichage selon la présente invention.

Avantageusement au moins un, et de préférence les deux, desdites faces actives **21,22** ne sont pas planes mais convexes ou concaves ; cela conduit à l'agrandissement de l'image. De manière encore plus préférée, au moins un de ces dioptres **21,22** convexes est asphérique. Cela permet de corriger les aberrations optiques et diminue les distorsions de l'image.

Dans le mode de réalisation selon les figures 1 et 2, le système optique d'affichage **10** ne comprend aucun autre composant optique.

Comme cela est montré de manière schématique sur la figure 2, l'afficheur **12** et le prisme **20** sont configurés et disposés de manière à ce que l'afficheur **12** (représenté sur la figure 2 uniquement comme point de départ des faisceaux optiques, et étant situe proche de la face interne **3** de la vitre **2**) projette son image sur la première face convexe **21** du prisme **20,** et que le prisme **20** projette l'image, refléchie sur la face basale **23,** de sa deuxième face convexe **22** sur une zone de réflexion **30** de la face interne **3** de la vitre **2.** A l'intérieur du prisme **20** l'image est réfractée de la première face active **21** vers la face basale **23,** puis réfléchi sur la face basale **23** vers la deuxième face active **22.** L'image projetée à partir de la deuxième face active **22** sur la face interne **3** de la vitre **2** est réfléchie dans l'oeil **41** de l'utilisateur. L'utilisation d'un prisme **20** à deux faces contiguës convexes **21,22** conduit à l'agrandissement de l'image.

Dans le mode de réalisation selon la figure 1 le masque **1** selon l'invention présente un seul système optique d'affichage **10** disposé devant l'un des yeux **41** de l'utilisateur. Selon un autre mode de réalisation, non montré sur les figures, le masque **1** comprend deux systèmes optiques d'affichage **10,** un pour (et devant) chaque oeil **41** de l'utilisateur. Selon encore un autre mode de réalisation, non montré sur les figures, le masque comprend deux systèmes optiques d'affichage pour (devant) le même oeil de l'utilisateur ; dans ce cas, l'un desdits systèmes optiques est typiquement disposé en haut de la vitre et l'autre en bas de la vitre.

D'une manière générale, l'afficheur **12** peut être fixé sur la face interne **3** de la vitre **2** (comme sur la figure 1) ou sur la monture **5** (variante non montrée sur les figures). Le prisme **20** peut être fixé sur la face interne **3** de la vitre **2** ou sur la monture **5,** à l'aide de moyens de fixation appropriés. Dans chacun de ces deux cas ledit moyen de fixation peut fixer également l'afficheur **12** ; dans cette variante l'afficheur **12** et le prisme **20** peuvent former un seul bloc, maintenus ensemble et fixés sur la face interne **3** de la vitre **2** ou sur la monture **5** par un moyen de fixation commun. Dans une autre variante le prisme **20** est fixé sur la face interne **3** de la vitre **2** avec le sommet **24** du prisme. Selon la forme du prisme **20** ce sommet **24** peut être une pointe sommitale, une arête sommitale (réfringente), ou une surface sommitale. Dans cette dernière variante le prisme **20** peut être rapproché le plus de la vitre **2** pour minimiser l'encombrement du système optique d'affichage **10** ; le fait que le sommet **24** du prisme touche la face interne **3** de la vitre **2** ne gêne pas forcément le fonctionnement du prisme **20.**

Comme cela a été mentionné ci-dessus, les faces latérales **25,26** du prisme **20** ne participent pas à l'effet optique du prisme **20** et du système optique d'affichage. Elles peuvent être planes, concaves ou convexes ; elles peuvent être peintes en noir et/ou servir comme face d'appui ou de préhension mécanique pour positionner le prisme **20** lors de son montage dans le masque **1.** Dans un autre mode de réalisation lesdits moyens de fixation prennent attache sur au moins une des faces latérales **25,26** du prisme **20.**

La figure 3 illustre de manière schématique un autre mode de réalisation du système optique d'affichage selon l'invention, dans lequel une lentille **28,** qui peut être plano-convexe, se trouve sur le chemin optique entre le prisme **20** et la face interne **3** de la vitre **2.** Elle peut améliorer la focalisation de l'image virtuelle. Dans le cas où l'afficheur **12** et le prisme **20** forment un système monobloc **42,** ladite lentille **28** peut faire fonction de fenêtre d'étanchéité. On note que dans le mode de réalisation de la figure 3 les deux dioptres du prisme forment une seule surface courbe **27** qui est orientée vers la surface interne **3** de la vitre **2** ; ce prisme ne présente pas d'arête réfringente. Bien évidemment, il est possible d'utiliser un tel prisme dans lequel les deux dioptres sont représentées par une seule surface courbe, qui est typiquement asphérique, dans tous les modes de réalisation de l'invention.

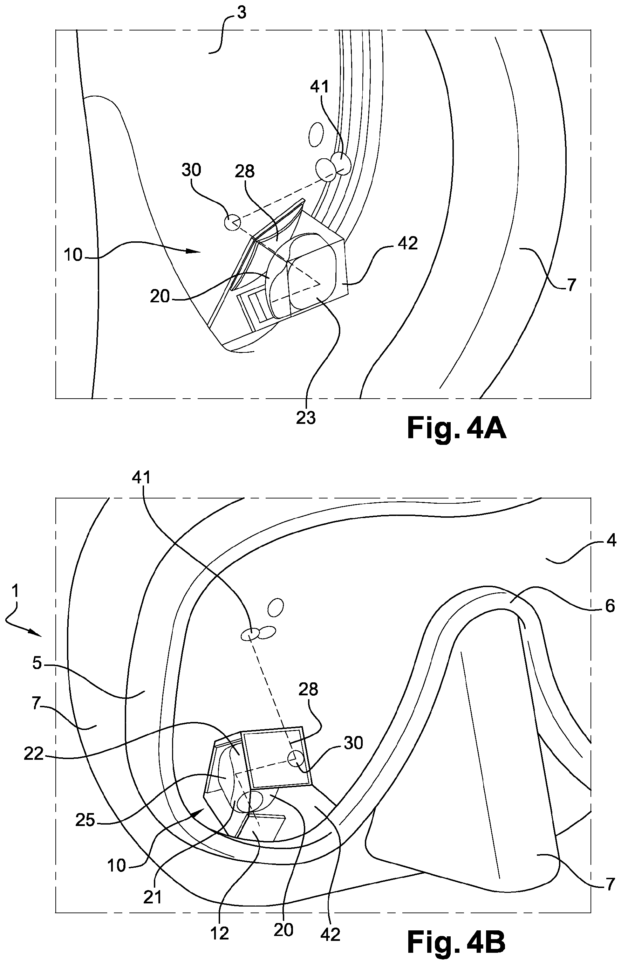

La figure 4 montre deux vues différentes d'un système monobloc tel que décrit en relation avec la figure 3, à savoir une vue de l'intérieur du masque (figure 4A) et une vue de l'extérieur (figure 4B). On distingue le système monobloc **42** (représenté en transparence pour faire apparaître ses composants optiques). La lentille **28** forme fenêtre d'étanchéité ; elle se trouve à une faible distance de la vitre **2.** Trois différentes positions de la pupille **41** de l'utilisateur sont représentées. Ce système monobloc peut être fixé sur la vitre **2** ou sur la monture **6.**

L'invention peut être mise en oeuvre avec des masques de plongée. Ces masques comprennent au moins une vitre **2,** et peuvent comprendre une monture **5.** Ils peuvent présenter un passage pour le nez **6** ou non ; dans le premier cas la vitre **2** est plus proche de l'œil **41** de l'utilisateur que dans le deuxième cas, et la présente invention, qui permet de diminuer la taille du système optique d'affichage **12,** sera d'autant plus avantageuse. On préfère des masques dans lesquelles la vitre **2** est plane, qui n'induisent pas de distorsion de l'image.

Le masque selon l'invention permet d'afficher tous types d'informations, sous la forme alphanumérique et/ou d'images, en une ou plusieurs couleurs, qui sont visibles de l'utilisateur et qui se superposent à sa vision normale à travers la vitre. Ces informations peuvent être de différentes natures et peuvent être fournies par des sources ou capteurs de natures différentes, et peuvent concerner par exemple la mesure du temps (notamment l'heure, le temps écoulé depuis un point zéro, le temps restant jusqu'à un événement à survenir), la mesure de l'espace (notamment la profondeur de plongée, la direction cardinale, la position), les réserves en ressources portées par l'utilisateur (notamment en air comprimé, oxygène, énergie électrique), l'environnement (notamment la température extérieure, le taux de CO₂, le taux d'oxygène, le taux de CO, des distances par rapport à des obstacles, la visibilité, des images provenant d'une caméra portée par l'utilisateur), des informations et instructions reçues à partir d'un émetteur externe (par exemple des informations sur des dangers non visibles de l'utilisateur, des ordres données à l'utilisateur), des graphiques (par exemple des courbes de plongée, des courbes de décompression).

Le masque **1** selon l'invention présente de nombreux avantages. Grâce à la projection de l'image sur la face intérieure **3** de la vitre **2** aucun effort de focalisation n'est demandé à l'utilisateur car l'image projetée se superpose à sa vision naturelle. Le prisme **20** du système optique d'affichage concentre la majorité des fonctions optiques : il agrandit l'image et permet de la projeter sur une zone de réflexion **30** suffisamment grande pour permettre sa perception par l'utilisateur du masque avec un bon confort visuel. Le faisceau est replié dans le prisme, sans risque de dérèglement des surfaces réfléchissantes, et l'image est convergée et corrigée grâce aux deux faces non planes d'entrée et de sortie du faisceau. Ainsi le système optique d'affichage est très compact, et par conséquent le champ de vision total du porteur du masque n'est pas réduit. Ainsi la vision directe de l'utilisateur est très peu obstruée par le système optique. L'installation du système optique à l'intérieur du masque **1** ne nécessite pas d'augmenter la distance entre l'oeil **41** et la vitre **2.**

Le système optique d'affichage selon l'invention est particulièrement simple, et peut être monté directement sur un masque de plongé de type courant, pourvu d'une vitre plane. Il n'est pas nécessaire de modifier le masque, et on conserve ses fonctions de protection et d'étanchéité. La vitre n'a pas de fonction optique active, elle agit simplement comme surface de réflexion spéculaire. Par rapport aux masques dans lesquels la vitre est galbée, l'ajout du système d'affichage ne nécessite ni un contrôle précis de la concavité ni un ajustement individuel du système d'affichage à la concavité de la vitre. Le système d'affichage selon l'invention est particulièrement compact, et il peut être fixé facilement sur la vitre plane par collage (ce qui peut être plus difficile dans le cas d'une vitre galbée).

Dans un mode de réalisation on ajoute sur la surface interne de la vitre un revêtement fonctionnel. Ce revêtement peut être de type connu. Il peut s'agir d'un revêtement à fonction optique, par exemple d'un revêtement réflectif à bande large (tel qu'une couche métallique ou une couche diélectrique), ou d'un revêtement réflectif à bande étroite centrée sur la longueur d'onde de d'émission de l'afficheur (typiquement une couche diélectrique). Il peut s'agit d'un revêtement qui combine l'une de ces fonctions optiques avec une ou plusieurs autres fonctions, notamment une fonction anti-buée, une fonction anti-rayure ou une fonction oléophobique.

La consommation électrique d'un système optique d'affichage pourvu d'un micro-afficheur à base d'OLED est très réduite. L'alimentation électrique de l'afficheur peut être une batterie ; elle peut être positionnée par exemple dans le bloc optique.

Le système optique d'affichage selon l'invention peut s'adapter sur des masques existants, et il n'est normalement pas nécessaire de modifier leur conception. Cela représente un avantage important, car ces maques étant des produits très spéciaux, toute modification substantielle du masque, de sa vitre ou de sa coque engendrerait un coût significatif.

Dans une variante non représentée sur les figures, le système monobloc **12** selon l'invention comprend en plus un microprocesseur d'adressage et/ou une source rechargeable de courant qui alimente l'afficheur et, s'il est présent, le microprocesseur.

Le prisme **20** peut être réalisé en une matière plastique transparente appropriée, par exemple par les techniques connues de moulage ou d'injection. On peut également utiliser un prisme en verre, par exemple en verre moulé, avec des faces actives polies.

## Revendications

1. Masque de plongée (1), comprenant :
- une monture (5) apte à être montée sur le visage d'un utilisateur,
- une vitre (2) portée par ladite monture ,
- un système optique d'affichage (10), qui comprend
∘ un afficheur (12) propre à projeter une image et
∘ un prisme (20) propre à recevoir ladite image à partir dudit afficheur et à la renvoyer,
**caractérisé en ce que**
- le prisme (20) possède une première (21) et une deuxième (22) faces actives et une face basale (23),
- la vitre est une vitre plane qui présente, sur sa face interne (3), une zone de réflexion (30), et
- ledit afficheur et ledit prisme sont configurés et disposés de manière à ce que
∘ ledit afficheur projette ladite image sur la première face active (21) du prisme (20),
∘ l'image traverse le prisme et est réfléchie par la face basale (23) du prisme (20) vers la deuxième face active (22),
∘ l'image est projetée à partir de ladite deuxième face active (22) du prisme (20) sur ladite zone de réflexion (30) de ladite vitre (2),
∘ ladite vitre renvoie ladite image virtuelle dans l'oeil de l'utilisateur (41), et
∘ une lentille (28) est placée sur le chemin optique entre le prisme (20) et ladite zone de réflexion (30).

2. Masque de plongée selon la revendication 1, **caractérisé en ce qu'**au moins une desdites première et deuxième faces actives (21, 22) est convexe.

3. Masque de plongée selon la revendication 1 ou 2, **caractérisé en ce qu'**au moins une desdites première et deuxième faces actives (21, 22) est asphérique.

4. Masque de plongée selon l'une quelconque des revendication 1 à 3, **caractérisé en ce que** lesdites première et deuxième faces latérales actives (21, 22) s'étendent à partir d'une face basale (23) et se rejoignant au sommet (24) du prisme (20).

5. Masque de plongée selon l'une quelconque des revendications 1 à 4, **caractérisé en ce que** ledit prisme est fixé sur la face interne (3) de la vitre (2) avec son sommet (24).

6. Masque de plongée selon l'une quelconque des revendications 1 à 5, **caractérisé en ce que** ledit prisme comprend, outre lesdites première et deuxième faces latérales actives (21, 22), au moins une, notamment deux autres faces latérales inactives (25, 26), chaque face latérale inactive s'étendant à partir de ladite face basale (23) et se rejoignant en ladite pointe sommitale (24) ou arête sommitale ou surface sommitale.

7. Masque de plongée selon l'une quelconque des revendications 1 à 6, **caractérisé en ce que** le masque comprend un seul système optique d'affichage (10) disposé devant l'un des yeux (41) de l'utilisateur, ou bien deux systèmes optiques d'affichage (10), chacun desdits systèmes optiques étant disposé devant un oeil respectif de l'utilisateur.

8. Masque de plongée selon l'une quelconque des revendications 1 à 7, **caractérisé en ce que** l'un parmi l'afficheur (12) et le prisme (10) est fixé sur la face interne (3) de la vitre (2), alors que l'autre parmi l'afficheur et le prisme est fixé sur la monture (5).

9. Masque de plongée selon l'une quelconque des revendications 1 à 8, **caractérisé en ce que** ladite lentille (28) est de type plano-convexe.

10. Masque de plongée selon l'une quelconque des revendications 1 à 9, ledit masque de plongée comprenant une monture apte à être montée sur le visage d'un utilisateur et une vitre portée par ladite monture,
ledit système optique d'affichage comprenant
- un afficheur (12) propre à projeter une image,
- un prisme (20) propre à recevoir ladite image à partir dudit afficheur et à renvoyer ladite image en direction de la vitre, ledit prisme (20) possédant une première et une deuxième faces actives,
- une lentille (28) placée sur le chemin optique entre le prisme (20) et ladite zone de réflexion (30),
- des moyens de fixation sur la monture ou la vitre dudit masque,
et dans lequel ledit afficheur (12) et ledit prisme (20 forment un système optique monobloc (42).

11. Masque de plongée selon la revendication 10, dans lequel dans ledit système optique monobloc ladite lentille assure une fonction de fenêtre d'étanchéité.

12. Maque de plongée selon l'une des revendications 10 ou 11, dans lequel ledit système optique monobloc est étanche.

13. Masque de plongée selon la revendication 10 ou 11, dans lequel ledit système optique monobloc est fixé sur la vitre (2).

14. Masque de plongée selon l'une quelconque des revendications 10 à 13, dans lequel ledit système optique monobloc est fixé sur la monture (6).

## Patentansprüche

1. Tauchermaske (1), umfassend:
- einen Rahmen (5), der auf dem Gesicht eines Benutzers montiert werden kann,
- ein von dem Rahmen getragenes Fenster (2),
- ein optisches Anzeigesystem (10), das umfasst
o ein Display (12), das ein Bild projizieren kann und
o ein Prisma (20), das das Bild von dem Display empfangen und zurücksenden kann,
**dadurch gekennzeichnet, dass**
- das Prisma (20) eine erste (21) und eine zweite (22) Wirkfläche sowie eine Grundfläche (23) aufweist,
- das Fenster ein Flachfenster ist, das auf seiner Innenseite (3) eine Reflexionszone (30) aufweist, und
- das Display und das Prisma so konfiguriert und angeordnet sind, dass
o das Display das Bild auf die erste aktive Fläche (21) des Prismas (20) projiziert,
o das Bild durch das Prisma geht und von der Grundfläche (23) des Prismas (20) in Richtung der zweiten aktiven Fläche (22) reflektiert wird,
o das Bild von der zweiten aktiven Fläche (22) des Prismas (20) auf die Reflexionszone (30) des Fensters (2) projiziert wird,
o das Fenster das virtuelle Bild in das Auge (41) des Benutzers reflektiert und
o eine Linse (28) auf dem optischen Weg zwischen dem Prisma (20) und der Reflexionszone (30) angeordnet ist.

2. Tauchermaske nach Anspruch 1, **dadurch gekennzeichnet, dass** mindestens eine der ersten und zweiten aktiven Flächen (21, 22) konvex ist.

3. Tauchermaske nach Anspruch 1 oder 2, **dadurch gekennzeichnet, dass** mindestens eine der ersten und zweiten aktiven Flächen (21, 22) asphärisch ist.

4. Tauchermaske nach einem der Ansprüche 1 bis 3, **dadurch gekennzeichnet, dass** diese ersten und zweiten aktiven Seitenflächen (21, 22) von einer Basisfläche (23) ausgehen und sich an der Oberseite (24) des Prismas (20) treffen.

5. Tauchermaske nach einem der Ansprüche 1 bis 4, **dadurch gekennzeichnet, dass** das Prisma mit seiner Oberseite (24) an der Innenseite (3) des Fensters (2) befestigt ist.

6. Tauchermaske nach einem der Ansprüche 1 bis 5, **dadurch gekennzeichnet, dass** das Prisma zusätzlich zu den ersten und zweiten aktiven Seitenflächen (21, 22) mindestens eine, insbesondere zwei weitere inaktive Seitenflächen (25, 26) aufweist, wobei sich jede inaktive Seitenfläche von der Basisfläche (23) erstreckt und sich am Gipfelpunkt (24) oder am Gipfelrand oder an der Gipfeloberfläche trifft.

7. Tauchermaske nach einem der Ansprüche 1 bis 6, **dadurch gekennzeichnet, dass** die Maske ein einziges optisches Displaysystem (10) umfasst, das vor einem der Augen (41) des Benutzers platziert ist, oder zwei optische Displaysysteme (10), wobei jedes dieser optischen Systeme vor einem jeweiligen Auge des Benutzers angeordnet ist.

8. Tauchermaske nach einem der Ansprüche 1 bis 7, **dadurch gekennzeichnet, dass** eines vom Display (12) oder Prisma (10) auf der Innenseite (3) des Fensters (2) befestigt ist, während das andere vom Display und Prisma auf der Halterung (5) befestigt ist.

9. Tauchermaske nach einem der Ansprüche 1 bis 8, **dadurch gekennzeichnet, dass** die Linse (28) vom Typ plan-convex ist.

10. Tauchermaske nach einem der Ansprüche 1 bis 9, wobei die Tauchermaske einen Rahmen umfasst, der auf dem Gesicht eines Benutzers montiert werden kann, und ein von dem Rahmen getragenes Fenster,
wobei das optische Displaysystem Folgendes umfasst:
- ein Display (12), das ein Bild projizieren kann,
- ein Prisma (20), das das Bild von der Anzeige empfangen und zum Fenster zurücksenden kann, wobei das Prisma (20) eine erste und eine zweite aktive Fläche aufweist,
- eine Linse (28), die im optischen Weg zwischen dem Prisma (20) und der Reflexionszone (30) angeordnet ist,
- Mittel zur Befestigung am Rahmen oder am Fenster der Maske,
und in dem dieses Display (12) und dieses Prisma (20) ein optisches Monoblocksystem bilden.

11. Tauchmaske nach Anspruch 10, wobei in dem optischen Monoblocksystem die Linse eine abdichtende Fensterfunktion bereitstellt.

12. Tauchmaske nach einem der Ansprüche 10 oder 11, wobei das optische Monoblock System wasserdicht ist.

13. Tauchmaske nach Anspruch 10 oder 11, wobei das optische Monoblocksystem am Fenster (2) befestigt ist.

14. Tauchmaske nach einem der Ansprüche 10 bis 13, wobei das optische Monoblocksystem am Rahmen (6) befestigt ist.

## Claims

1. Diving mask (1), comprising:
- a frame (5) able to be mounted on the face of a user,
- a window (2) carried by said frame,
- an optical display system (10), which comprises
o a display (12) capable of projecting an image, and
o a prism (20) capable of receiving said image from said display and forwarding it,
**characterized in that**
- the prism (20) has a first (21) and a second (22) active face and a basal face (23),
- the window is a flat window that, on the internal face (3) thereof, has a reflection area (30), and
- said display and said prism are configured and disposed so that:
o said display projects said image onto the first active face (21) of the prism (20),
o the image passes through the prism and is reflected by the basal face (23) of the prism (20) towards the second active face (22),
o the image is projected from said second active face (22) of the prism (20) onto said reflection area (30) of said window (2),
o said window sends said image into the eye of the user (41), and
o a lens (28) is placed on the optical path between the prism (20) and said reflection area (30).

2. Diving mask according to claim 1, **characterized in that** at least one of said first and second active faces (21, 22) is convex.

3. Diving mask according to claim 1 or 2, **characterized in that** at least one of said first and second active faces (21, 22) is aspherical.

4. Diving mask according to any one of claims 1 to 3, **characterized in that** said first and second active lateral faces (21, 22) extend from a basal face (23) and join at the top (24) of the prism (20).

5. Diving mask according to any one of claims 1 to 4, **characterized in that** said prism is fixed to the internal face (3) of the window (2) with its top (24).

6. Diving mask according to any one of claims 1 to 5, **characterized in that** said prism comprises, apart from said first and second active lateral faces (21, 22), at least one and in particular two other inactive lateral faces (25, 26), each inactive lateral face extending from said basal face (23) and joining at said top point (24) or top edge or top surface.

7. Diving mask according to any one of claims 1 to 6, **characterized in that** the mask comprises a single optical display system (10) disposed in front of one of the eyes (41) of the user, or two optical display systems (10), each of said optical systems being disposed in front of a respective eye of the user.

8. Diving mask according to any one of claims 1 to 7, **characterized in that** one from the display (12) and the prism (10) is fixed to the internal face (3) of the window (2), whereas the other one from the display and the prism is fixed to the frame (5).

9. Diving mask according to any one of claims 1 to 8, **characterized in that** said lens (28) is of the plano-convex type.

10. Diving mask according to any one of claims 1 to 9, said diving mask comprising a frame capable of being mounted on the face of a user and a window carried by said frame,
said optical display system comprising
- a display (12) capable of projecting an image,
- a prism (20) capable of receiving said image from said display and returning said image towards the window, said prism (20) having a first and a second active face,
- a lens (28) placed on the optical path between the prism (20) and said reflection zone (30),
- means of fixing to the frame or the window of said mask,
and in which said display (12) and said prism (20) form a one-piece optical system (42).

11. Diving mask according to claim 10, wherein in said one-piece optical system said lens provides a sealing window function.

12. Diving mask according to one of claims 10 or 11, wherein said one-piece optical system is watertight.

13. Diving mask according to claim 10 or 11, wherein said one-piece optical system is fixed to the window (2).

14. Diving mask according to any one of claims 10 to 13, wherein said one-piece optical system is fixed on the frame (6).
